# EUROPEAN PATENT APPLICATION

(11) **EP 2 849 073 A1**
(43) Date of publication of application: **18.03.2015**
(21) Application number: 13787719.7
(22) Date of filing: 07.03.2013
(51) Int. Cl.: G06F 13/00, G06Q 30/02

(54) **INFORMATION PROCESSING SYSTEM AND INFORMATION PROCESSING METHOD**

(30) Priority: 08.05.2012 JP 2012106944
(71) Applicant: KPI Solutions Co., Ltd., Chuo-ku, Tokyo 104-0061 (JP)
(72) Inventor: ISHIDA, Tetsuro, Tokyo 104-0061 (JP); HEUNGMANY, Bounnong, Tokyo 104-0061 (JP); MURAYAMA, Takayuki, Tokyo 104-0061 (JP)
(74) Representative: Cabinet Plasseraud
(86) International application number: PCT/JP2013/056262
(87) International publication number: WO 2013/168460

(57) **Abstract**

To provide an information processing system and an information processing method capable of increasing the effect of advertising distribution. An information processing system includes: a mail creation unit 11 for distributing, to multiple users, mail including link information that can identify the users; and a cushion page creation unit 16 which, when access based on the link information is received from a client 30 of a user, transmits a web page to the client 30 to cause the client 30 to receive a cookie 38 for transmitting attribute information according to an attribute of the user to an ad network server 50 based on the link information.

## Description

### Technical Field

Some aspects of the present invention relate to an information processing system and an information processing method.

### Background

In recent years, as means for distributing an advertisement over the Internet, a service called an ad network (also called an "AD network" or "advertising network") for distributing an advertisement across media sites of multiple providers from an ad network server (also called an "AD network server," "ad server," or "advertising server") of one provider has been provided. In the ad network, a provider providing an ad server distributes an advertisement to multiple media sites that form the ad network. If an advertiser passes an order for an advertisement to one provider providing an ad network, the advertisement can be distributed to multiple media sites that form the ad network.

Here, since a distribution of the advertisement in a blind way is ineffective, it is considered a technique for focusing on users as advertising targets to enhance advertising effectiveness. For example, Patent Document 1 teaches the use of a cookie for tracking a user's Internet usage to enable an ad server to count pieces of information indicative of the number of times a user accesses a specific site, or the like.

Patent Document 1: JP 2011-138518 A

### Summary

However, with the recent growing awareness of security, users who delete cookies regularly have been increasing. If the cookies are deleted, since no one can know an action history of a user, users as advertising targets cannot be narrowed down, resulting in a reduction in advertising effectiveness.

The some aspects of the present invention have been made in view of the above-mentioned problem, and it is one object thereof is to provide an information processing system and an information processing method capable of increasing the effect of advertising distribution.

One information processing system according to the present invention includes: distribution means for distributing, to multiple users, mail including link information that can identify the users; and transmission means which, when access based on the link information is received from a terminal of a user, transmits, based on the link information, a web page to the terminal to cause the terminal to receive cookie information for transmitting attribute information according to an attribute of the user to an advertising server.

One information processing system according to the present invention includes: distribution means for distributing, to multiple users, mail including link information that can identify the users; and transmission means which, when access based on the link information is received from a terminal of a user, transmits cookie information corresponding to the user to the terminal based on the link information.

One information processing method according to the present invention includes the steps of: distributing, to multiple users, mail including link information that can identify the users; and when access based on the link information is received from a terminal of a user, transmitting, based on the link information, a web page to the terminal to cause the terminal to receive cookie information for transmitting attribute information according to an attribute of the user to an advertising server.

One information processing method according to the present invention includes the steps of: distributing, to multiple users, mail including link information that can identify the users; and when access based on the link information is received from a terminal of a user, transmitting cookie information corresponding to the user to the terminal based on the link information.

Note that the terms "unit," "means," "apparatus," and "system" in the present invention does not merely denote physical means, and the present invention includes cases where the functions of the "unit," "means," "apparatus," and "system" are implemented in software. Further, the function of one "unit," "means," "apparatus," or "system" may be implemented by two or more physical means or apparatuses, or the functions of two or more "units," "means," "apparatuses," or "systems" may be implemented by one physical means or apparatus.

According to the present invention, there can be provided an information processing system and an information processing method capable of increasing the effect of advertising distribution.

### Description of the Drawings

FIG. 1 is a diagram showing an outline of an advertisement distribution system as a first embodiment of the present invention.
FIG. 2 is a functional block diagram showing an example of a functional configuration of the advertisement distribution system shown in FIG. 1.
FIG. 3 is a diagram for describing a specific example of conversion processing for URLs in mail.
FIG. 4 is a flowchart showing an example of a flow of processing on an e-mail newsletter distribution server.
FIG. 5 is a flowchart showing an example of a flow of processing on a client that received mail.
FIG. 6 is a flowchart showing an example of a flow of processing on the e-mail newsletter distribution server.
FIG. 7 is a flowchart showing an example of a flow of processing on a member attribute information management server.
FIG. 8 is a flowchart showing an example of a flow of processing on a media site providing server.
FIG. 9 is a functional block diagram showing an example of a functional configuration of an advertisement distribution system as a second embodiment of the present invention.
FIG. 10 is a flowchart showing an example of a flow of processing on a media site providing server.
FIG. 11 is a functional block diagram showing an example of a functional configuration of an advertisement distribution system as a third embodiment of the present invention.
FIG. 12 is a flowchart showing an example of a flow of processing on a media site providing server.

### DETAILED DESCRIPTION

Embodiments of the present invention will be described below. Note that the same or similar components are given the same or similar reference numerals in the following description and the drawings to be referred to.

### (1 First Embodiment)

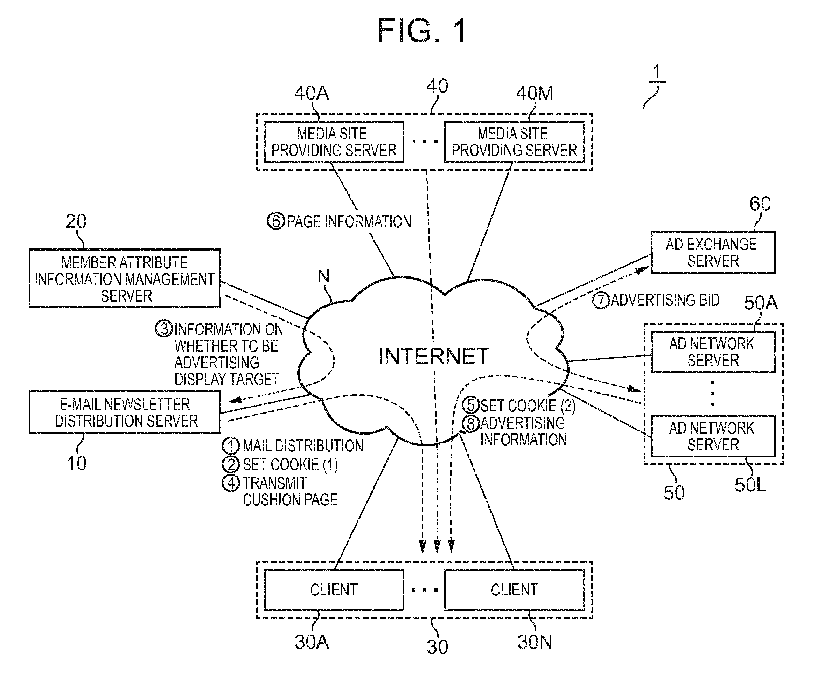

FIG. 1 to FIG. 7 are diagrams for describing a first embodiment. The embodiment will be described below with reference to these drawings along the following flow. First, an outline of a system according to the embodiment will be described in "1.1." Next, a functional configuration of the system will be described in brief in "1.2," and a flow of processing will be described in "1.3." Finally, the effects of the embodiment will be described in "1.4."

### (1.1 Outline)

An e-mail newsletter by e-mail (which may be simply called "mail" below) is beneficial measures to connect registrants (consumers mainly as individuals) and an enterprise member as the issuer (hereinafter also called the "distributor"). However, since the number of mails and e-mail newsletters has been rapidly increasing in recent years, temporal restrictions and the burden on the registrants (hereinafter also called the "subscribers") as recipients involved in opening incoming e-mail newsletters have been increasing. With this, since the rate of opening e-mail newsletters decreases from year to year, there is such an adverse effect that information or notification guidance the enterprise as the issuer wants to deliver to the registrants is not delivered to the registrants.

In the meantime, an Internet advertisement is often charged by the number of advertising displays (impressions charging) in the charge form. There are needs for an enterprise placing an advertisement to avoid the display of the advertisement to consumers already as members (such as an advertisement for new member subscription) when the advertisement is distributed to consumers who are members of some sort of information distribution means via the Internet (including subscriber members (subscribers) of e-mail newsletters) or to distribute an advertisement according to attribute information on members (such as members holding membership cards or members whose membership expiration date is coming up soon).

There are also needs for consumers as the members to receive effective information within the scope of agreement on the provisions for information distribution. As mentioned above, since information transmissibility is reduced with a rapid increase in e-mail newsletter today, such needs of the consumers are increasing.

Therefore, in the embodiments to be described below, an Internet advertisement is linked to information on each member subscribing for an e-mail newsletter (member attribute information) upon transmission of information beneficial to information on the member himself or herself. This enables a person who places an advertisement to use the e-mail newsletter and the Internet advertisement concurrently in order to realize means for transmitting information, desired by a user to transmit, to consumers desired by the advertisement placing person to transmit accurately. Further, the productivity and efficiency of consumption activities between consumers and the enterprise are improved and the relationship between the advertisement and the consumers is so changed that information transmission means having social significance of realizing a smarter consumption society can be realized.

### (1.1 System outline)

FIG. 1 is a diagram showing a schematic configuration of an advertisement distribution system 1 as an information processing system according to the embodiment. As shown in FIG. 1, the advertisement distribution system 1 according to the embodiment includes an e-mail newsletter distribution server 10, a member attribute information management server 20, a client terminal 30 (a generic term that includes client terminals 30A to 30N, which is also called the client 30 below), a media site providing server 40 (a generic term that includes media site providing servers 40A to 40M), an AD network server 50 (a generic term that includes AD network servers 50A to 50L, which is also called the ad network server 50 below), and an AD exchange server 60 (hereinafter also called the ad exchange server 60). The e-mail newsletter distribution server 10, the member attribute information management server 20, the client 30, the media site providing server 40, the ad network server 50, and the ad exchange server 60 are communicable with one another through the Internet N.

Briefly, the outline of the system is such that the client 30 has the function of receiving mail (e-mail newsletter) from the e-mail newsletter distribution server 10 and the function of displaying a web page acquirable by accessing the media site providing server 40. At this time, since the ad network server 50 can receive identification information for identifying a user or attributes of the user from the client 30 via a cookie, an advertisement according to the characteristics of the user can be transmitted to the client 30. In other words, a fine advertisement distribution method according to the characteristics of the user, called an action targeting advertisement, can be realized in the advertisement distribution system 1.

Here, in the action targeting advertisement, if information cannot be acquired from the client via a cookie, effective advertising distribution cannot be performed. In the embodiment, this problem is solved by the following method: Mail distributed by the e-mail newsletter distribution server 10 in the advertisement distribution system 1 according to the embodiment includes a link to access an URL corresponding to user identification information (member information). This URL is an URL for running a program on the e-mail newsletter distribution server 10 (such as that referred to as PHP (Hypertext Preprocessor)). Then, the e-mail newsletter distribution server 10 has the function of setting a cookie including user identification information on a client 30 used by the user according to the URL (including the identification information) accessed by the user. The e-mail newsletter distribution server 10 also has the function of transmitting a cushion page for acquiring a cookie corresponding to user attribute information when the client 30 accesses the ad network server 50.

Thus, in the advertisement distribution system 1 according to the embodiment, a cookie for acquiring user identification information and a cookie for acquiring user attribute information are set on the client 30 each time the user selects (clicks on) a link on the mail. This can make the time of loss of the cookies shorter (where the cookies are reset each time an e-mail newsletter is displayed, or the like) even if the user deletes cookies regularly.

Further, in the advertisement distribution system 1 of the embodiment, an e-mail newsletter capable of setting a cookie including information that can identify each user (member) individually is so transmitted that the media site providing server 40 can identify each individual user (or the attributes of the user). In other words, the user (or the attributes of the user) can be identified individually without the user's login to a member site provided by the media site providing server 40, and this enables an effective advertising distribution from the first access.

### (1.1.2 Outline of system processing)

Referring to FIG. 1, a flow of processing in the advertisement distribution system 1 will be described in brief below.

In the example of FIG. 1, the e-mail newsletter distribution server 10 is a server for distributing mail, called an e-mail newsletter, to be regularly transmitted to many users where the distributor is a subscriber. Each user can read the e-mail newsletter by using e-mail software installed on the client 30 to receive the mail (e-mail newsletter) distributed from the e-mail newsletter distribution server 10 ((1) in the figure (note that encircled 1 is described as (1) below. The same applies to (2) and the like).

The mail distributed by the e-mail newsletter distribution server 10 includes URL (Uniform Resource Locator) information as a link to one or more sites in addition to text data, image data, and the like, such as a message from the distributor of the e-mail newsletter toward the users as the subscribers. The e-mail newsletter distribution server 10 converts this URL to an URL including member identification information that can identify each member, respectively, and transmits the mail to the client 30. In other words, even if the users receive identical mail, URLs described respectively are different. This enables the server side to identify who is the user when the user clicks on the URL.

Here, the URL including the member identification information is an URL for temporarily accessing the e-mail newsletter distribution server 10 and then redirecting to a landing page provided by the distributor. When a user clicks on the URL described in the e-mail newsletter, the e-mail newsletter distribution server 10 accessed from the client 30 sets a cookie including identification information that can identify the user individually (Cookie (1) in the figure) in a browser of the client 30. Further, based on the identification information, the e-mail newsletter distribution server 10 inquires of the member attribute information management server 20 as to whether the user is an advertising display target, and when the user is an advertising display target, about the attributes ((3) in the figure).

At this time, when the user is the advertising display target, the e-mail newsletter distribution server 10 creates a cushion page for the client 30 to access the ad network server 50, and transmits the cushion page to the client 30 ((4) in the figure). At this time, the cushion page is created individually based on the attributes of the user, and transmits the attributes of the user to the ad network server 50 upon connecting to the ad network server 50. Thus, the ad network server 50 checks on user attribute information (identification information/mapping numbers for identifying the attributes) according to the user attributes received from the cushion page (for example, information on either of male/female, which generation, in which part the user lives, what the point balance on the member site, and the like), and transmits a cookie (Cookie (2) in the figure) including the user attribute information to the client 30 ((5) in the figure).

When the client 30 accesses the media site providing server 40 and receives web page information ((6) in the figure) via this cookie transmitted from the ad network server 50, the ad network server 50 for distributing an advertisement can acquire user attribute information. This enables the ad network server 50 to distribute an advertisement according to the user attribute information ((7) and (8) in the figure).

In more detail, a flow of processing upon advertising display is such that, when the client 30 accesses the media site providing server 40 to display a web page on a media site, the media site providing server 40 transmits web page information requested from the client 30 ((6) in the figure). At this time, the client 30 transmits the user attribute information to the ad network server 50 based on the cookie received from the ad network server 50. The ad network server 50 hands in a bid for the advertisement on the ad exchange server 60, and makes a bid on an advertisement of an advertiser set on the ad network server 50. As a result, if the ad network server 50 can win the bid (make a successful bid) for the advertisement frame, the ad network server 50 will select advertising information according to the user attributes and advertising display conditions and transmit the advertising information to the client 30 ((6) in the figure). Thus, on a display screen of the client 30, the advertisement is displayed on the web page previously sent.

### (1.2 Functional configuration of system)

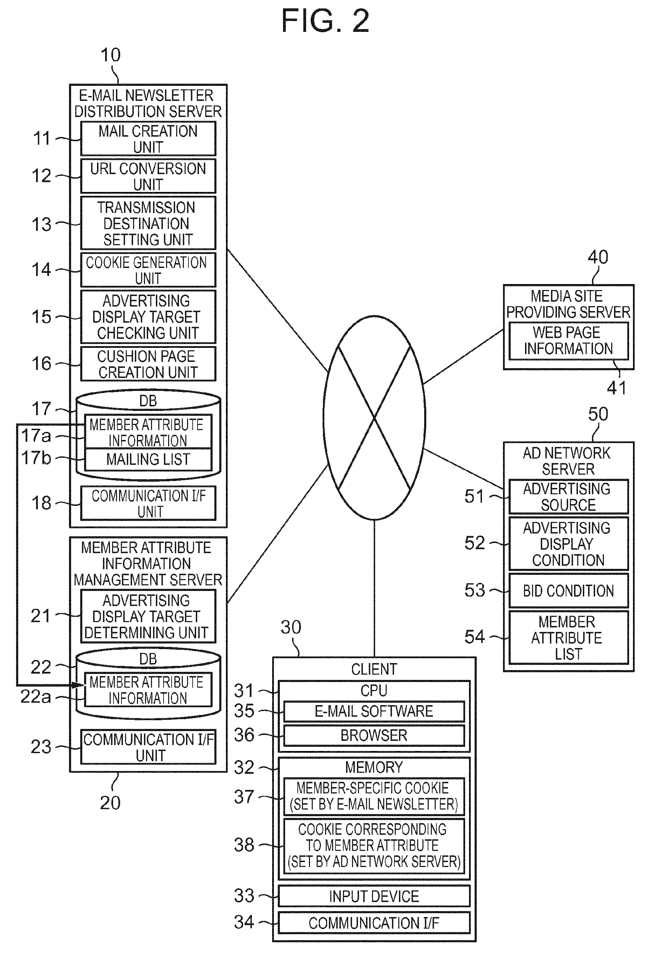

Referring next to FIG. 2, the functional configuration of each of the apparatuses that constitute the advertisement distribution system 1. FIG. 2 is a functional block diagram for describing the function of each of the apparatuses that constitute the advertisement distribution system 1. In FIG. 2, the description of the ad exchange server 60 and the media site providing server 40 is omitted. As for the media site providing server 40 and the ad network server 50, information held by each apparatus is described but the description of the function of each apparatus is omitted.

### (1.2.1 E-mail newsletter distribution server 10)

First, the e-mail newsletter distribution server 10 will be described. As mentioned above, the e-mail newsletter distribution server 10 transmits mail created by a distributor to one or more users (members/subscribers), and transmits, to the client 30 used by each user, a cookie corresponding to user identification information or a cushion page for setting a cookie transmitted from the ad network server 50.

The e-mail newsletter distribution server 10 has a mail creation unit 11, an URL conversion unit 12, a transmission destination setting unit 13, a cookie generation unit 14, an advertising display target checking unit 15, a cushion page creation unit 16, a database (DB) 17, and a communication interface (I/F) unit 18.

The mail creation unit 11 accepts the creation of an e-mail newsletter by the distributor of the e-mail newsletter. As the creation method for this e-mail newsletter, for example, mail may be able to be created by accepting direct input from an input device such as a keyboard, not shown, or the distributor accessing the e-mail newsletter distribution server 10 from another device on the Internet may be able to create mail on a web page.

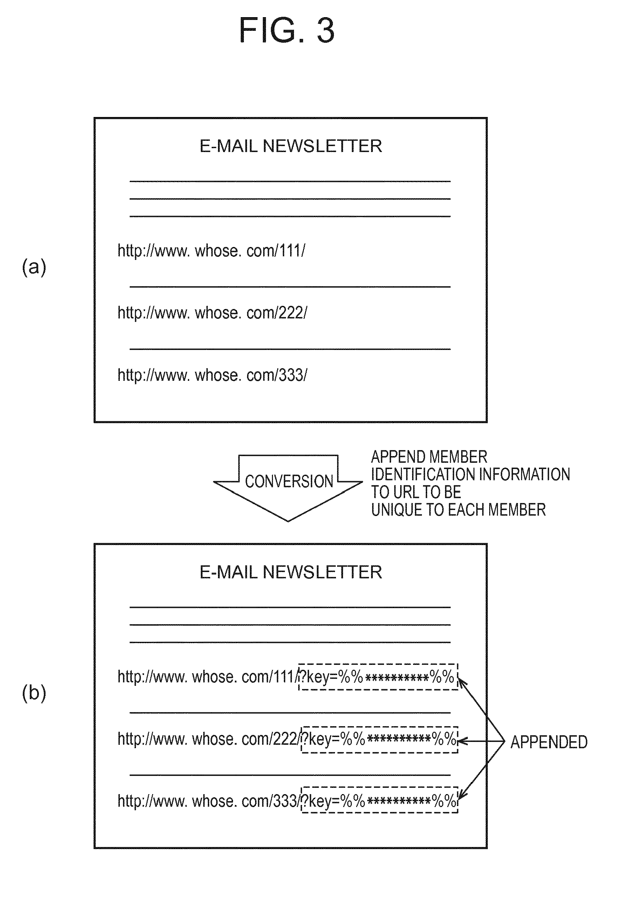

The URL conversion unit 12 converts an URL described in the mail created by the distributor of the e-mail newsletter in a manner to be unique to each of recipients (subscribers/users) of the e-mail newsletter, respectively. FIG. 3 shows an outline of processing in the URL conversion unit 12. In FIG. 3, (a) is mail created by the distributor and (b) is mail after the URL conversion by the URL conversion unit 12.

As shown in FIG. 3, the URL conversion unit 12 appends, to a linked URL entered by the distributor, user identification information as a mail transmission destination obtained by referring to member attribute information 17a stored in the DB 17 to make the linked URL unique to each member.

Note that the URLs described in the e-mail newsletter are URLs for temporarily accessing the e-mail newsletter distribution server 10. The e-mail newsletter distribution server 10 has a database for linking each URL described in the e-mail newsletter (FIG. 3(a)) to the URL of a landing page on a site desired to make the user access for real. This enables the e-mail newsletter distribution server 10 to display the landing page on the client 30 after the processing such as the transmission of the cookie or the cushion page.

Upon creation of the mail in the mail creation unit 11, the transmission destination setting unit 13 extracts, from a mailing list 17b in the DB 15, mail addresses as mail distribution destinations according to conditions (for example, male/female, members having ○ member points or more, and the like) specified from the distributor, and sets the mail addresses as the delivery addresses of the mail.

The cookie generation unit 14 creates a cookie corresponding to the user identification information as mentioned above, and transmits the cookie to the client 30 to set the cookie in a browser 36 of the client 30. The user identification information can be identified by an URL through which the e-mail newsletter distribution server 10 is accessed by the user clicking on a link described in the mail.

The advertising display target checking unit 15 inquires of the member attribute information management server 20 based on the user identification information as to whether the user is an advertising display target. As mentioned above, the user identification information can be identified by the URL through which the e-mail newsletter distribution server 10 is accessed by the user clicking on the link described in the mail.

When the user clicks on the link described in the mail, the cushion page creation unit 16 creates a cushion page to be transmitted to the client 30. At this time, the cushion page creation unit 16 creates a cushion page with an URL different in each group of user attributes according to the attributes of the user. Note that the user attributes can be acquired from the member attribute information management server 20 based on the user identification information. The cushion page has the function of causing the client 30 to receive a cookie corresponding to the member attributes from the ad network server 50, and redirecting the connection destination to a landing page set by the distributor (usually a web page on a site operated by the distributor).

As mentioned above, the DB 17 manages the member attribute information 17a and the mailing list 17b. The member attribute information 17a is a database for managing attribute information on members (users) of one or more distributors. The member attribute information 17a includes various pieces of information, such as gender, age, address (or residential area), and member points, in addition to identification information for identifying each member. The mailing list 17b is a database for managing the mail address of each member managed in the member attribute information 17a. The mailing list 17b is linked to the member attribute information 17a via member identification information or the like.

The communication I/F unit 18 is an interface used when the e-mail newsletter distribution server 10 communicates with another information processing apparatus through the Internet N.

### (1.2.2 Member attribute information management server 20)

Next, a functional configuration of the member attribute information management server 20 will be described. The member attribute information management server 20 manages member attribute information 22a on a database 22. Thus, when a link described in mail distributed from the e-mail newsletter distribution server 10 is clicked, the member attribute information management server 20 receives an inquiry from the advertising display target checking unit 15 of the e-mail newsletter distribution server 10 as to whether the user is an advertising display target, achieving functions to respond to the inquiry and return user attributes. To this end, the member attribute information management server 20 has an advertising display target determining unit 21, the DB 22, and a communication I/F 23.

The advertising display target determining unit 21 refers to the member attribute information 22a managed in the DB 22 to determine whether the user having identification information (user ID) specified in an inquiry from the client 30 is an advertising display target. This advertising display target is a user who matches advertising display conditions 52 managed by the ad network server 50. For example, when "male" and "users living in ○○ prefecture" are specified on the ad network server 50, the advertising display target determining unit 21 determines whether the user about which the inquiry is made from the client 30 matches the advertising display conditions, and determines the attributes of the user about which the inquiry is made.

The DB 22 manages the member attribute information 22a as mentioned above. Since the member attribute information 22a is created and managed based on the member attribute information 17a managed by the e-mail newsletter distribution server 10, a user managed on both servers is managed based on the same member identification number. Like in the member attribute information 17a, each user is also managed in the member attribute information 22a in association with various attributes, such as gender, district of residence, and member points.

Further, the member attribute information 22a is so managed that an administrator can determine whether each user is an advertising display target according to the advertising display conditions 52 registered on the ad network server 50 to enable the advertising display target determining unit 21 to determine whether the user is an advertising display target.

The communication I/F unit 23 is an interface used when the member attribute information management server 20 communicates with another information processing apparatus through the Internet N.

### (1.2.3 Client 30)

The client 30 will be described. The client 30 is an information terminal operated by each user as a subscriber (member) of an e-mail newsletter. As a specific example of the client 30, for example, a PC (Personal Computer), a mobile phone (either a feature phone or a smartphone), a slate-type tablet terminal, or the like is considered.

The client 30 generally has a CPU (Central Processor Unit) 31, memory 32, an input device 33, a communication I/F 34, and the like.

The CPU 31 executes a program stored in the memory 32 to control the execution of various processes on the client 30. The e-mail software 35 capable of browsing various kinds of mail including an e-mail newsletter distributed from the e-mail newsletter distribution server 10 and the browser 36 capable of browsing various web pages receivable from the media site providing server 40 mainly run on the CPU 31.

The memory 32 is, for example, a storage medium such as a RAM (Random Access Memory). The memory 32 temporarily stores various kinds of program code of the e-mail software 35, the browser 36, and the like executed by the CPU 31, and data required to run a program. Particularly, a cookie 37 distributed from the e-mail newsletter distribution server 10 and set in the browser 36, and a cookie 38 distributed from the ad network server 50 and set in the browser 36 are stored in the memory 32.

As mentioned above, the cookie 37 is set in the browser 36 by the e-mail newsletter distribution server 10. The cookie 37 includes identification information for identifying each individual user. This enables the member attribute information management server 20 and the like to receive member identification information included in the cookie 37 when the browser 36 accesses the member attribute information management server 20 and the like. Further, the e-mail newsletter distribution server 10 can acquire a history of which landing pages each user has accessed.

On the other hand, the cookie 38 is received from the ad network server 50 connected through the cushion page and set in the browser 36. The cookie 38 includes information (attribute information) that can identify user attributes. This enables the ad network server 50 to receive user identification information included in the cookie 38 when the browser 36 accesses the ad network server 50 to display an advertisement. The ad network server 50 can transmit an appropriate advertisement to the client 30 according to the attribute information.

The input device 33 is a device used by the user to enter various kinds of information. For example, a pointing device such as a mouse or a touch pad, a keyboard, or the like corresponds to the input device 33. Operations for browsing mail using the e-mail software 35, browsing of web pages using the browser 36, selection of a link described in an e-mail newsletter, and the like are all input by using the input device 33.

The communication I/F unit 34 is an interface used when the client 30 communicates with another information processing apparatus through the Internet N.

### (1.2.4 Media site providing server 40 and ad network server 50)

The media site providing server 40 is a server capable of providing (distributing, or transmitting) web page information 41 in response to a request from the client 30.

The ad network server 50 is a server for distributing an advertisement to media sites provided by the media site providing server 40. The ad network server 50 transmits, to the client 30, advertising information (advertising source 51) according to user attribute information received from each user so that an advertisement according to the attributes of the user can be displayed on the client 30. In the embodiment, the ad network server 50 manages various kinds of information such as the advertising source 51, the advertising display conditions 52, bid conditions 53, and a member attribute list 54.

The advertising source 51 is advertising information to be displayed on a web page at a media site provided by the media site providing server 40, which is created by an advertiser. The advertising display conditions 52 are conditions for setting attributes of each user for which the advertiser side providing the advertising source 51 desires to display an advertisement.

The bid conditions 53 are to define conditions for winning a bid (conditions for making a bid) for an advertisement when bid processing is performed between the ad exchange server 60 and the ad network server 50 to decide on the advertisement to be displayed on a web page upon transmission of the web page information 41 from the media site providing server 40. If the ad network server 50 can win the bid as a result of bidding according to the bid conditions 53, the advertising source 51 according to the advertising display conditions 52 can be displayed on the client 30.

The member attribute list 54 is a list for managing the attributes each member can have. The advertising display conditions 52 and attribute information set in the cookie 38 can be specified according to the identification number of each attribute managed in the member attribute list 54. When the attributes of a user are sent through a cushion page, the member attribute list 54 is referred to, and the cookie 38 including identification numbers (mapping numbers) of attributes corresponding to the attributes of the user is transmitted to the client 30.

### (1.3 Flow of processing)

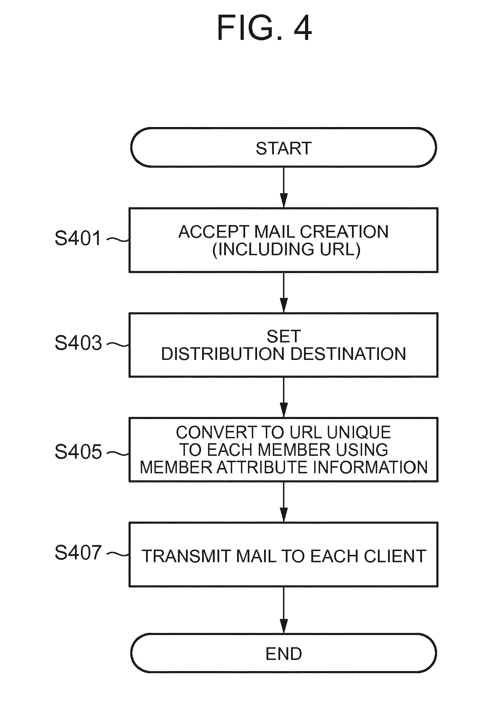

Referring to FIG. 4 to FIG. 7, a flow of processing in the advertisement distribution system 1 according to the embodiment will be described below. Note that respective processing steps to be described below can be executed by changing the order arbitrarily or executed in parallel within a range not to cause any inconsistency in processing contents, or any other step may be added between respective processing steps. Further, a step described as one step for convenience sake can also be divided into two or more steps, and steps described to be divided into steps for convenience sake can also be performed as one step.

### (1.3.1 Flow of processing upon distribution of e-mail newsletter)

First, a flow of processing upon distribution of mail by the e-mail newsletter distribution server 10 will be described with reference to FIG. 4. FIG. 4 is a flowchart showing the flow of processing upon distribution of mail by the e-mail newsletter distribution server 10.

First, the e-mail newsletter distribution server 10 accepts, in the mail creation unit 11, the creation of mail from the distributor of an e-mail newsletter (S401). As a specific method therefor, for example, it is considered that a web page on which the mail creation unit 11 can create the e-mail newsletter is distributed through the Internet N to accept the creation of the e-mail newsletter from another information processing apparatus connected to the Internet N. At this time, like the specific example shown in FIG. 3(a), link information including URLs can be included in the text of the e-mail newsletter.

Next, the transmission destination setting unit 13 sets distribution destinations (transmission destinations) of the e-mail newsletter (S403). As this setting method for distribution destinations, for example, it is considered that the mail addresses of users corresponding to conditions for subscribers of the e-mail newsletter (for example, "women in their thirties" or the like) specified by the users on a web page on which the mail creation unit 11 mentioned above can create the e-mail newsletter are extracted and set from the mailing list 17b.

Further, the URL conversion unit 12 converts URLs included in mail created by the mail creation unit 11 to be unique to each of users based on member identification information corresponding to the user as delivery destinations (S405, and see FIG. 3(b)).

After such processing is performed, the e-mail newsletter distribution server 10 transmits mail to one or more mail addresses set in the transmission destination setting unit 13 (S407).

### (1.3.2 Flow of processing on client side that received mail)

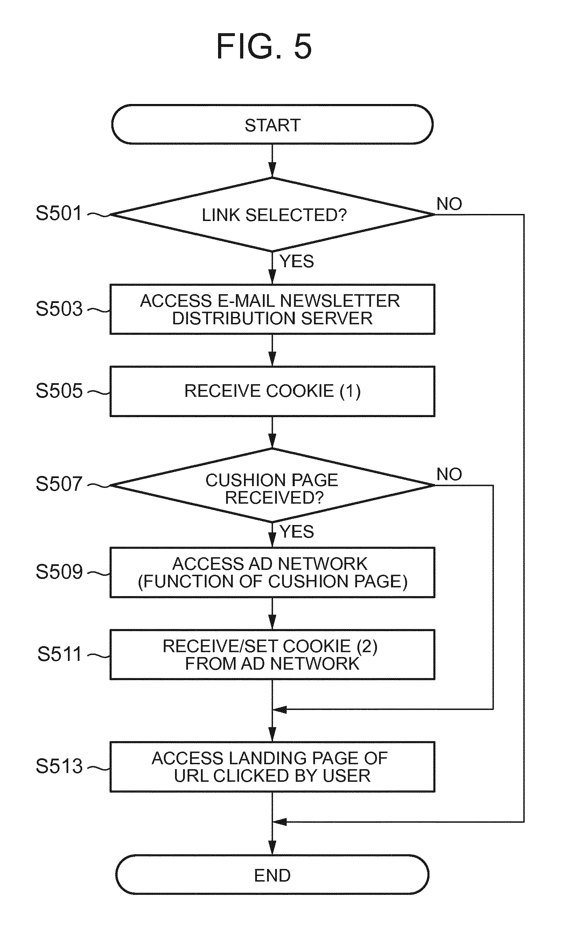

Next, a flow of processing on the client 30 that received mail will be described with reference to FIG. 5. FIG. 5 is a flowchart showing the flow of processing on the client 30 that received mail distributed from the e-mail newsletter distribution server 10.

When the mail distributed from the e-mail newsletter distribution server 10 is received and displayed by the e-mail software 35, the user can select any link described in the mail.

When a link described in the mail is selected by the user (Yes in S501), the browser 36 accesses the e-mail newsletter distribution server 10 based on the URL set to the link (S503). As mentioned above, since user identification information is included in the URL, the browser 36 receives a cookie 37 including user identification information from the e-mail newsletter distribution server 10 (S505). After that, when a cushion page is further transmitted from the e-mail newsletter distribution server 10 (Yes in S507), the browser 36 accesses the ad network server 50 according to the control by the cushion page (S509) so that a cookie 38 including user attribute information can be received from the ad network server 50 as a response (S511). Upon completion of receiving the cookie 38, the browser 36 accesses a landing page (a web page with which the distributor associates the URL selected by the user) corresponding to the link selected by the user based on the control by the cushion page (S513).

After that, when the media site providing server 40 that forms an ad network together with the ad network server 50 is accessed, the ad network server 50 can acquire the user attribute information because the cookie 38 is set, enabling an appropriate advertisement according to the attributes of the user to be displayed on the browser 36.

When no cushion page is received in S507 (No in S507), it means that the user is not an advertising display target. Therefore, the browser 36 accesses a landing page (a web page with which the URL selected by the user is associated by the distributor) corresponding to the link selected from the user under the control of the e-mail newsletter distribution server 10 without performing processing S509 to S511 (S513).

### (1.3.4 Flow of processing on e-mail newsletter distribution server 10 when accessed from client 30)

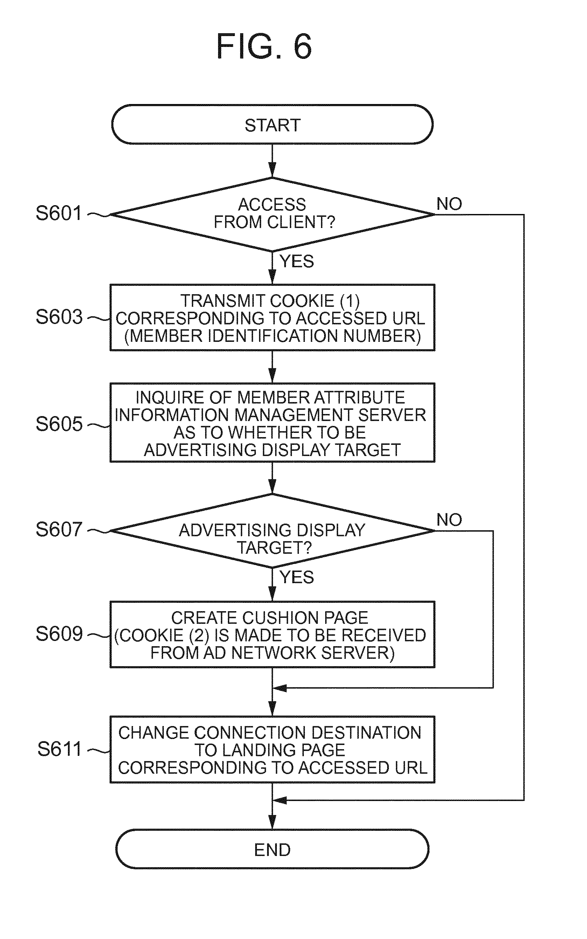

A flow of processing on the e-mail newsletter distribution server 10 when accessed from the client 30 by a user selecting a link described in an e-mail newsletter will be described with reference to FIG. 6. FIG. 6 is a flowchart showing the flow of processing on the e-mail newsletter distribution server 10 when accessed from the client 30. This processing is processing on the side of the e-mail newsletter distribution server 10 in response to processing on the side of the client 30 described in "1.3.2" with reference to FIG. 5.

When accessed from the client 30 according to an URL described in the e-mail newsletter (Yes in S601), the cookie generation unit 14 transmits, to the client 30, a cookie 37 corresponding to member identification information included in the accessed URL (S603). Then, the advertising display target checking unit 15 inquires of the member attribute information management server 20 as to whether a user having the identification information is an advertising display target (S605). When the user is an advertising display target (Yes in S607), the cushion page creation unit 16 creates a cushion page for causing the client 30 to receive a cookie 38 from the ad network server 50, and transmits the cushion page to the client 30 (S609). Then, the e-mail newsletter distribution server 10 changes the connection destination of the client 30 to a landing page corresponding to the link selected from the user (S611). Note that this function may be embedded in the cushion page.

When the user is not an advertising display target in S607 (No in S607), since there is no need to set the cookie 38 on the client 30, the e-mail newsletter distribution server 10 changes the connection destination of the client 30 to the landing page corresponding to the link selected from the user without transmitting the cushion page (S611).

### (1.3.5 Flow of processing on member attribute information management server 20)

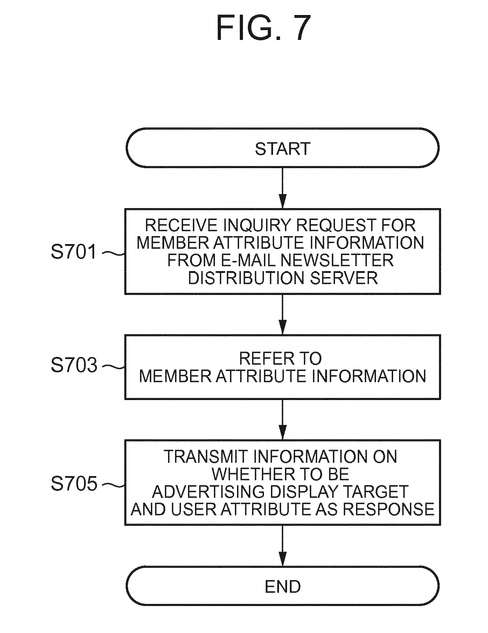

A flow of processing on the member attribute information management server 20 will be described with reference to FIG. 7. FIG. 7 is a flowchart showing the flow of processing on the member attribute information management server 20. This processing is processing on the side of the member attribute information management server 20 in response to S605 described in "1.3.4" with reference to FIG. 6.

When an inquiry request for member attribute information 22a is received from the e-mail newsletter distribution server 10 based on the member identification information (S701), the advertising display target determining unit 21 refers to the member attribute information 22a managed by the DB 22 (S703). Then, the advertising display target determining unit 21 determines whether the attributes of a user having the member identification information is advertising display targets, and transmits the determination result and the attributes of the user to the client 30 (S705).

### (1.3.6 Flow of processing on client 30 upon advertising display)

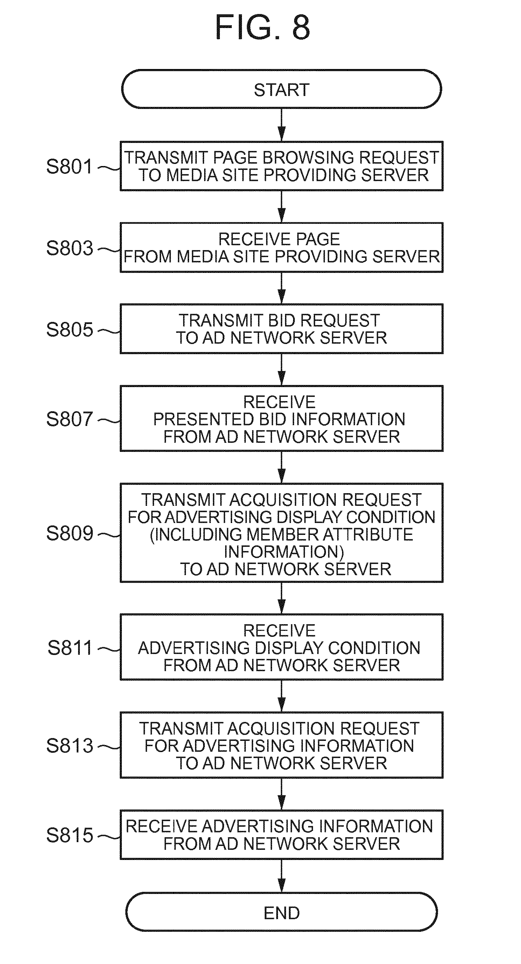

Finally, a flow of processing on the client 30 upon advertising display will be described with reference to FIG. 8. FIG. 8 is a flowchart showing the flow of processing on the client 30 upon advertising display.

When a web page at a media site provided by the media site providing server 40 is displayed on the browser 36 according to a user's operation, the browser 36 of the client 30 transmits, to the media site providing server 40, a transmission request (browsing request) for web page information 41 (S801). Since the media site providing server 40 transmits the web page information 41 (for example, information described in HTML or the like) to the client 30 in response to the request, the client 30 receives the web page information 41 (S803).

The browser 36 accesses the ad network server 50 based on tag information included in the web page information 41 to request an advertising bid (S805). The ad network server 50 hands in the advertising bid and makes the bid with the ad exchange server 60 according to the request. Since the browser 36 receives conditions for presented bid information (advertising size and the like) from the ad network server 50 (S807), when the ad network server 50 wins the advertising bid, an acquisition request for advertising display conditions 52 is transmitted to the ad network server 50 as the bidder (S809). Here, information on the size of an URL 51 of an advertising source 51 and the like are included in the advertising display conditions 52. Information relating to user attribute information (mapping numbers) is also included in the acquisition request for the advertising display conditions 52.

Based on the request received from the client 30, the ad network server 50 transmits, to the client 30, the advertising display conditions 52 for the advertising source 51 that matched the member attribute information. When receiving the advertising display conditions 52 including the URL and display size of the advertising source 51 that matched the member attribute information, and the like (S811), the client 30 transmits an acquisition request for the advertising source 51 to the ad network server 50 based on the URL and the like in the advertising display conditions 52 (S813). Since the ad network server 50 transmits the advertising source 51 in response to the request, the client 30 receives the advertising source 51 and displays an advertisement corresponding to the advertising source 51 on the browser 36 (S815).

### (1.4 Effects of the embodiment)

As described above, in the advertisement distribution system 1 of the embodiment, mail distributed by the e-mail newsletter distribution server 10 includes an URL that can identify each member. When accessed from the client 30 based on the URL, the e-mail newsletter distribution server 10 sets, in the browser 36, a cookie 37 that can transmit member identification information. Further, the e-mail newsletter distribution server 10 transmits a cushion page to cause the client 30 to receive a cookie 38 including member attribute information from the ad network server 50. Since this enables the ad network server 50 to acquire user attribute information, appropriate advertising information according to the user attributes can be transmitted to the client 30. In other words, the effect of advertising distribution (the effect of advertising investment) can be increased.

Further, in the embodiment, the cookies 37 and 38 are set in the browser 36 each time the user selects a link included in the mail distributed from the e-mail newsletter distribution server 10. Since this enables the duration of setting the cookies 37 and 38 to be lengthened even if the user deletes cookies regularly (i.e., the cookies are reset frequently), the possibility for the media site providing server 40 to acquire user information can be increased.

Note that an advertising distribution is done according to the attributes of the user in the embodiment, but the present invention is not limited thereto. For example, it is also considered that an advertising distribution is done using the cookie 37 according to identification information that can identify each user individually.

Further, in the embodiment, the ad network server 50 has the advertising source 51, but the present invention is not limited thereto. For example, a server for handing in an advertising bid and a server for managing the advertising source 51 may be separated.

### (2 Second embodiment)

Subsequently, a second embodiment will be described. In the following description, the same functional components as those in the first embodiment are given the same reference numerals to omit redundant description. The description of the same operation and effects as those in the first embodiment will also be omitted. The following will mainly describe different points from the first embodiment. The same applies to "3 Third embodiment in this regard.

### (2.1 Outline of functional configuration, operation, and effects)

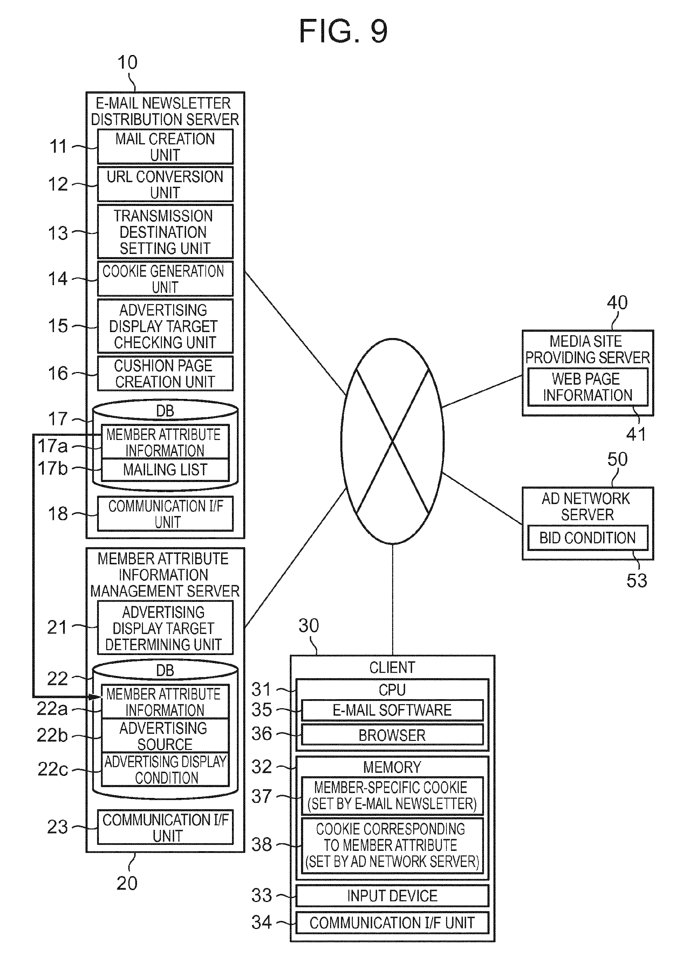

A functional block diagram of an advertisement distribution system 1 is shown in FIG. 9. In the first embodiment, the advertising display conditions 52 and the advertising source 51 are managed by the ad network server 50 as shown in FIG. 2, whereas in the embodiment, advertising display conditions 22c and an advertising source 22b are managed by the member attribute information management server 20 as shown in FIG. 9. In other words, the methods for advertising display on a media site provided by the media site providing server 40 are different. As a result, the embodiment also differs from the first embodiment in that there is no need to hold a member attribute list 54 on the ad network server 50.

Even in the advertisement distribution system 1 of the embodiment, mail distributed by the e-mail newsletter distribution server 10 includes an URL that can identify each member. When accessed from the client 30 based on the URL, the e-mail newsletter distribution server 10 sets, in the browser 36, a cookie 37 that can transmit member identification information. Further, the e-mail newsletter distribution server 10 transmits a cushion page for causing the client 30 to receive a cookie 38 including member attribute information from the ad network server 50. Since this enables the ad network server 50 to acquire user attribute information, an appropriate advertising information according to the user attributes can be transmitted to the client 30. In other words, the effect of advertising distribution (the effect of advertising investment) can be increased. This operation and effects are the same as those in the first embodiment.

Further, the cookies 37 and 38 are set in the browser 36 each time the user selects a link included in the mail distributed from the e-mail newsletter distribution server 10. Since this enables the duration of setting the cookies 37 and 38 to be lengthened even if the user deletes cookies regularly (i.e., the cookies are reset frequently), the possibility for the media site providing server 40 to acquire user information can be increased. The operation and effects thereof are also the same as those in the first embodiment.

Since a flow until the cookie 38 is set in the browser 36 of the client 30 is almost the same as that in the first embodiment, the description thereof will be omitted here. The following will mainly describe a flow of processing upon advertising display.

### (2.2 Flow of processing on client 30 upon advertising display)

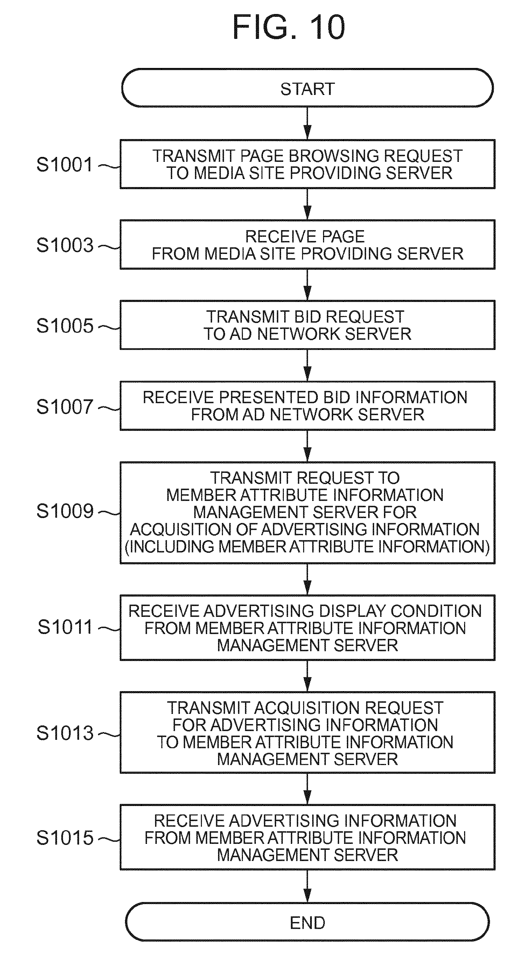

A flow of processing on the client 30 upon advertising display in the embodiment will be described with reference to FIG. 10, mainly focusing on points different from the first embodiment. FIG. 10 is a chart showing the flow of processing on the client 30 according to the embodiment upon advertising display.

Since processing from S1001 to S1007 is the same as S801 to S807 in the first embodiment, the description thereof will be omitted.

When the browser 36 receives conditions relating to presented bid conditions (advertising size, and the like) from the ad network server 50 (S1007), if the ad network server 50 wins the advertising bid, the browser 36 will transmit an acquisition request for advertising display conditions 22c to the member attribute information management server 20 (S1009). The acquisition request for the advertising display condition 22c is made, for example, through a tag including JavaScript (registered trademark) or the like. The acquisition request for the advertising display condition 22c also includes information relating to user attribute information (mapping numbers).

Based on the request received from the client 30, the member attribute information management server 20 transmits, to the client 30, the advertising display conditions 22c for an advertising source 22b that matches member attribute information. When receiving the advertising display conditions 22c including the URL, the display size, and the like of the advertising source 22b that matches the member attribute information (S1011), the client 30 transmits, to the member attribute information management server 20, an acquisition request for the advertising source 22b based on the URL and the like in the advertising display conditions 22c (S1013). Since the member attribute information management server 20 transmits the advertising source 22b according to the request, the client 30 receives the advertising source 22b and displays an advertisement according to the advertising source 22b on the browser 36 (S1015).

### (3 Third Embodiment)

Subsequently, a third embodiment will be described.

### (3.1 Outline of functional configuration, operation, and effects)

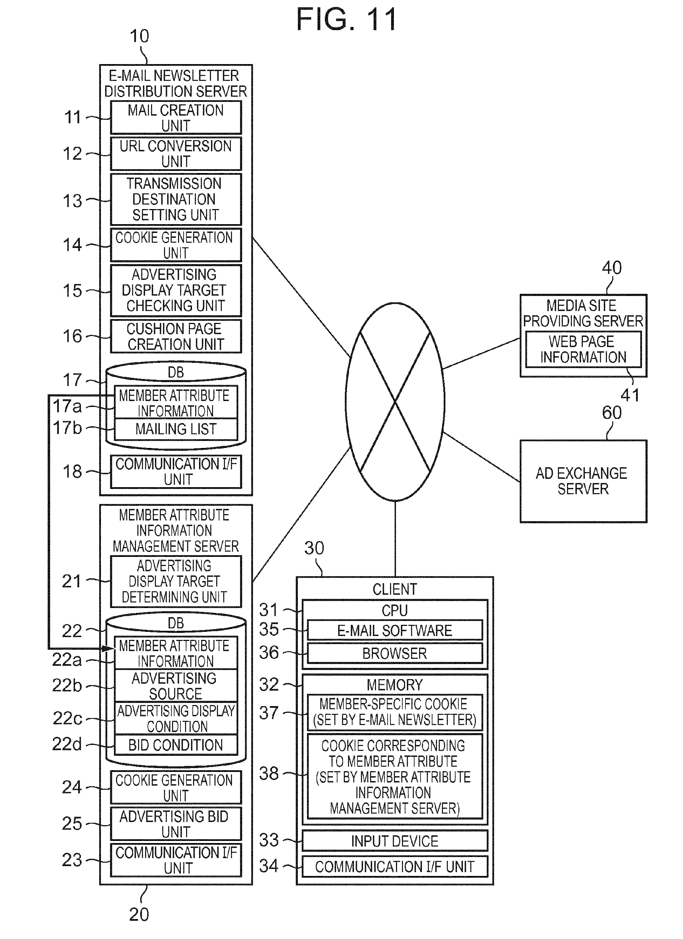

A functional block diagram of an advertisement distribution system 1 according to this embodiment is shown in FIG. 11. In the first embodiment and the second embodiment, the member attribute information management server 20 and the ad network server 50 are different apparatuses, whereas in the embodiment, the member attribute information management server 20 has the function of the ad network server 50. In other words, the member attribute information management server 20 performs the function of creating the cookie 38 and processing for handing in and making an advertising bid. Therefore, the member attribute information management server 20 manages respective pieces of information on the advertising source 22b, the advertising display conditions 22c, and bid conditions 22d. The member attribute information management server 20 further has an advertising bid unit 25 and a cookie generation unit 24.

Even in the advertisement distribution system 1 of the embodiment, mail distributed by the e-mail newsletter distribution server 10 includes an URL that can identify each member. When accessed from the client 30 based on the URL, the e-mail newsletter distribution server 10 sets, in the browser 36, a cookie 37 that can transmit member identification information. Further, the e-mail newsletter distribution server 10 transmits a cushion page for causing the client 30 to receive the cookie 38 including the member attribute information from the member attribute information management server 20. Since this enables the member attribute information management server 20 to acquire user attribute information, appropriate advertising information according to user attributes can be transmitted to the client 30. In other words, the effect of advertising distribution (the effect of advertising investment) can be increased. Although an entity for transmitting the cookie 38 and the advertising information is changed from the ad network server 50 to the member attribute information management server 20, the basic operation and effects are the same as those in the first embodiment.

Further, the cookies 37 and 38 are set in the browser 36 each time the user selects a link included in the mail distributed from the e-mail newsletter distribution server 10. Since this enables the duration of setting the cookies 37 and 38 to be lengthened even if the user deletes cookies regularly (i.e., the cookies are reset frequently), the possibility for the media site providing server 40 to acquire user information can be increased. This operation and effect are the same as those in the first embodiment.

Since a flow until the cookie 38 is set in the browser 36 of the client 30 is almost the same as that in the first embodiment (except that the member attribute information management server 20 performs processing to be performed on the ad network server 50), the description thereof will be omitted here. The following will mainly describe a flow of processing upon advertising display.

### (3.2 Flow of processing on client 30 upon advertising display)

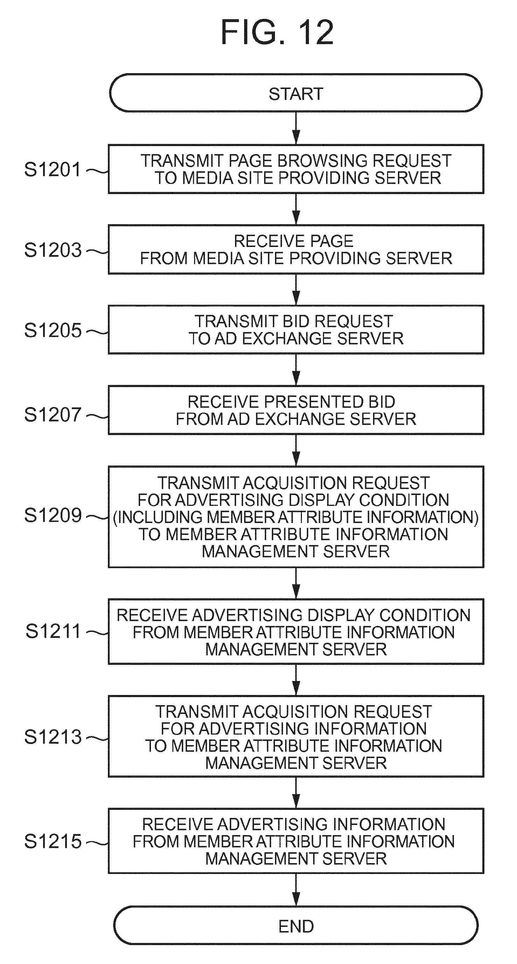

A flow of processing on the client 30 upon advertising display in the embodiment will be described with reference to FIG. 12 while focusing on points different from the first embodiment. FIG. 12 is a flowchart showing the flow of processing on the client 30 according to the embodiment upon advertising display.

Since processing S1201 to S1203 is the same as S801 to S803 in the first embodiment, the description thereof will be omitted.

The browser 36 accesses the ad exchange server 60 based on tag information included in web page information 41 to make a request for an advertising bid (S1205). Based on the request, the ad exchange server 60 reads bid conditions 22d from the member attribute information management server 20 to perform bid processing for RTB (Real-Time Bidding). When the browser 36 receives information on a bidder from the ad exchange server 60 (S1207), if the member attribute information management server 20 makes a successful bid for the an advertisement, the browser 36 will transmit an acquisition request for advertising display conditions 22c to the member attribute information management server 20 as the bidder (S1209). Here, the advertising display conditions 22c include information on the URL, size, and the like of an advertising source 22b. Further, the acquisition request for the advertising display conditions 22c includes information relating to user attribute information (mapping numbers).

Based on the request received from the client 30, the member attribute information management server 20 transmits, to the client 30 the advertising display conditions 22c corresponding to an advertising source 22b that matches member attribute information. When receiving the advertising display conditions 22c including the URL, display size, and the like of the advertising source 22b that matches the member attribute information (S1211), the client 30 transmits an acquisition request for the advertising source 22b to the member attribute information management server 20 based on the URL and the like in the advertising display conditions 22c (S1213). Since the member attribute information management server 20 transmits the advertising source 22b according to the request, the client 30 receives the advertising source 22b and displays an advertisement according to the advertising source 22b on the browser 36 (S1215).

### (4 Supplementary information)

Note that the configurations of the respective embodiments mentioned above may be combined or some components of the configurations may be replaced. The configuration of the present invention is not limited to the aforementioned embodiments alone, and various changes may be added without departing from the scope of the present invention.

### Description of Reference Numerals

1 ... advertisement distribution server, 10 ... e-mail newsletter distribution server, 11 ...mail creation unit, 12 ... URL conversion unit,
13 ... transmission destination setting unit, 14 ... cookie generation unit, 15 ... advertising display target checking unit, 16 ... cushion page creation unit, 17 ... database (DB), 17a ... member attribute information,
17b ... mailing list, 18 ... communication interface unit, 20 ... member attribute information management server, 21 ... advertising display target determining unit, 22 ... database (DB), 22a ... member attribute information, 22b ... advertising source, 22c ... advertising display condition, 22d ... bid condition, 23 ... communication interface unit, 24 ... cookie generation unit, 25 ... advertising bid unit, 30 ... client, 31 ... CPU, 32 ... memory, 33 ... input device, 34 ... communication interface unit, 35 ... e-mail software, 36 ... browser, 37 ... cookie, 38 ... cookie, 40 ... media site providing server, 41 ... web page information, 50 ... ad network server, 51 ... advertising source,
52 ... advertising display condition, 53 ... bid condition, 54 ... member attribute list, 60 ... ad exchange server, N ...Internet

## Claims

1. An information processing system comprising:
distribution means for distributing, to a plurality of users, mail including link information that can identify the users; and
transmission means which, when access based on the link information is received from a terminal of a user, transmits, based on the link information, a web page to the terminal to cause the terminal to receive cookie information for transmitting attribute information according to an attribute of the user to an advertising server.

2. The information processing system according to claim 1, further comprising
checking means which, when access based on the link information is received from the terminal of the user, checks, based on the link information, whether the user is a target of advertising display control,
wherein the transmission means transmits the web page to the terminal of the user as the target of the advertising display control.

3. An information processing system comprising:
distribution means for distributing, to a plurality of users, mail including link information that can identify the users; and
transmission means which, when access based on the link information is received from a terminal of a user, transmits cookie information corresponding to the user to the terminal based on the link information.

4. The information processing system according to claim 3, wherein when access based on the link information is received from the terminal of the user, the transmission means transmits, to the terminal based on the link information, cookie information for transmitting attribute information according to an attribute of the user to an advertising server.

5. The information processing system according to claim 4, further comprising
checking means which, when access based on the link information is received from the terminal of the user, checks, based on the link information, whether the user is a target of advertising display control,
wherein the transmission means transmits the cookie information to the terminal of the user as the target of the advertising display control.

6. An information processing method comprising the steps of:
distributing, to a plurality of users, mail including link information that can identify the users; and
when access based on the link information is received from a terminal of a user, transmitting, based on the link information, a web page to the terminal to cause the terminal to receive cookie information for transmitting attribute information according to an attribute of the user to an advertising server.

7. The information processing method according to claim 6, further comprising
a step in which, when access based on the link information is received from a terminal of a user, it is checked, based on the link information, whether the user is a target of advertising display control,
wherein the web page is transmitted to the terminal of the user as the target of the advertising display control.

8. An information processing method comprising the steps of:
distributing, to a plurality of users, mail including link information that can identify the users; and
when access based on the link information is received from a terminal of a user, transmitting cookie information corresponding to the user to the terminal based on the link information.

9. The information processing method according to claim 8, wherein the cookie information is cookie information for transmitting attribute information according to an attribute of the user to an advertising server.

10. The information processing method according to claim 9, further comprising
a step in which, when access based on the link information is received from the terminal of the user, it is checked, based on the link information, whether the user is a target of advertising display control,
wherein the cookie information is transmitted to the terminal of the user as the target of the advertising display control.
